# EUROPÄISCHE PATENTSCHRIFT

(11) **EP 0 950 640 B1**
(45) Veröffentlichungstag und Bekanntmachung des Hinweises auf die Patenterteilung: **22.01.2003**
(21) Anmeldenummer: 99104716.8
(22) Anmeldetag: 10.03.1999
(51) Int. Cl.: C02F 3/10, B01J 19/32

(54) **Füllmaterial für Tropfkörper und Verfahren zum Herstellen desselben**
Packing for trickling filters and process for its manufacture
Garnissage de filtres biologiques et procédé pour sa fabrication

(30) Priorität: 18.04.1998 DE 19817312
(43) Veröffentlichungstag der Anmeldung: 20.10.1999
(73) Patentinhaber: Norddeutsche Seekabelwerke GmbH & Co. KG, 26954 Nordenham (DE)
(72) Erfinder: Basse, Hartwig, 26954 Nordenham (DE)
(74) Vertreter: Möller, Friedrich, Dipl.-Ing.

(56) Entgegenhaltungen:
- EP-A- 0 332 907
- EP-A- 0 640 567
- US-A- 4 422 930

## Beschreibung

Die Erfindung betrifft ein Füllmaterial für Tropfkörper zur Behandlung von Fluiden, insbesondere zur biologischen Abwasserreinigung, gemäß dem Oberbegriff des Anspruchs 1. Weiterhin betrifft die Erfindung ein Verfahren zur Herstellung von Füllmaterial für Tropfkörper zur Behandlung von Fluiden gemäß dem Oberbegriff des Anspruchs 12.

Das hier angesprochene Füllmaterial dient zur biologischen Behandlung von Flüssigkeiten und Gasen. Beispielsweise kann dieses in der Abwassertechnik zur biologischen Reinigung von Abwasser eingesetzt werden. Das Füllmaterial wird im wesentlichen aus mehreren Streifen gebildet, auf denen ein Bakterien enthaltender biologischer Rasen angesiedelt wird. Die Streifen mit dem biologischen Rasen werden mit der zu behandelnden Flüssigkeit oder dem Gas in Kontakt gebracht.

Üblicherweise werden mehrere Streifen durch ein Haltemittel miteinander verbunden. In der EP 274 633 B1 und EP 0 640 567 werden als Haltemittel quer zur Längserstreckung der Streifen orientierte Haltebahnen verwendet. Die Verbindung der Streifen mit den Haltebahnen erfolgt durch Impulsschweißen. Infolge dieses Verbindungsverfahrens kann es zu Beeinträchtigungen der Streifen und/oder Haltebahnen, beispielsweise zu einer Reduzierung der Querschnitte, kommen. Sind den Streifen zugaufnehmende Verstärkungsstränge zugeordnet, kann es außerdem zu Beeinträchtigungen der Verstärkungsstränge kommen. Die geschilderten Beeinträchtigungen erhöhen die Gefahr des Reißens der Stränge.

Hiervon ausgehend liegt der Erfindung die Aufgabe zugrunde, ein Füllmaterial für Tropfkörper sowie ein Verfahren zur Herstellung desselben vorzuschlagen, bei dem mehrere Streifen durch mindestens ein einfach herstellbares Haltemittel verbunden sind, ohne daß es dabei zu Beeinträchtigungen der Streifen kommt.

Zur Lösung dieser Aufgabe weist das erfindungsgemäße Füllmaterial die Merkmale des Anspruchs 1 auf. Die Stränge können in erweichtem Zustand auf die das Füllmaterial bildenden Streifen aufgebracht werden. In diesem erweichtem Zustand paßt sich die Form des Strangs an die Kontur des Füllmaterials, insbesondere der Streifen, an und verbindet sich gleichzeitig mit denselben. Eine Druckaufbringung, wie beispielsweise beim bisher üblichen Impulsschweißen der Haltebahnen auf die Streifen, ist nicht notwendig. Die Ausbildung des Haltemittels als Strang bedeutet auch eine Materialersparnis gegenüber der Verwendung einer Haltebahn.

Vorzugsweise befindet sich bei dem erfindungsgemäßen Füllmaterial mindestens im Bereich des Strangs oder gegebenfalls mehrerer Stränge mindestens ein Zwischenraum zwischen benachbarten Streifen. Die erweichten Stränge können in die Zwischenräume eintreten und auf diese Weise neben dem Kontakt mit den Oberseiten der Streifen auch Kontakt mit den den Zwischenräumen zugewandten Seiten der Streifen haben. Hierdurch kann die Anbindung der Stränge an die Streifen verbessert werden. Weiterhin kann durch die Zwischenräume hindurch eine Verbindung der an den Zwischenräumen angrenzenden Streifen mit unterhalb der Zwischenräume angeordneten Streifen oder Haltebahnen hergestellt werden.

Eine vorteilhafte Ausbildung der Erfindung ist dadurch gekennzeichnet, daß jeweils mindestens ein Haltemittel auf gegenüberliegenden Seiten der Streifen angeordnet ist. Durch diese Anordnung der Haltemittel kann die Verbindung der Streifen verbessert werden.

Gemäß einem weiteren Vorschlag der Erfindung ist ein weiteres Haltemittel auf der dem oder jedem Strang gegenüberliegenden Seite der Streifen als eine quergerichtete Haltebahn ausgebildet. Ist eine Haltebahn notwendig, kann diese so ebenfalls über die Stränge mit den Streifen verbunden werden. Die Stränge haben hierbei Kontakt einerseits mit den Streifen und treten andererseits durch Zwischenräume zwischen benachbarten Streifen hindurch unter Ausbildung einer Verbindung mit der Haltebahn. Ein Verschweißen oder Versiegeln der Streifen mit der Haltebahn ist dann nicht mehr notwendig.

Die Erfindung eignet sich auch für Füllmaterial, bei dem eine Mehrzahl von Streifen in unterschiedlichen Schichten bzw. Lagen angeordnet ist. Vorteilhafterweise sind die Streifen der einzelnen Lagen versetzt zueinander angeordnet, derart, daß die Zwischenräume zwischen benachbarten Streifen der einen Lage durch die Streifen einer anderen Lage überdeckt sind. Durch die versetzte Anordnung der Streifen der einzelnen Lagen sind durch die Zwischenräume zwischen benachbarten Streifen einer Lage die Streifen einer (darunterliegenden) weiteren Lage zugänglich. Mittels der Stränge können so die Streifen mehrerer Lagen miteinander verbunden werden.

Ein Verfahren zur Lösung der Aufgabe weisen die Maßnahmen des Anspruchs 12 auf. Demnach werden die die Haltemittel bildenden Stränge im erweichten Zustand auf die Streifen aufgebracht. Vorzugsweise befinden sich die Stränge bei der Aufbringung auf die Streifen in einem pastösen Zustand. Mit der Abkühlung tritt eine Verfestigung des Materials der Stränge ein, so daß eine feste Verbindung derselben mit den Streifen entsteht.

Eine vorteilhafte Ausbildung des Verfahrens ergibt sich, wenn im Bereich der Zwischenräume durch das Haltemittel Streifen einer Lage mit Streifen einer anderen Lage oder einem anderen Haltemittel, vorzugsweise einer Haltebahn, verbunden werden. Das (dickflüssige oder pastöse) Haltemittel tritt selbständig oder durch entsprechende Führung der Zuführeinrichtung in von benachbarten Streifen gebildete Zwischenräume ein. Es kann sich also selbständig an die Form und Anordnung der Streifen anpassen. Dadurch wird der Einsatzbereich der möglichen Konturen der Streifen erweitert. Beispielsweise kann das Haltemittel auch durch Ausnehmungen in den Streifen durch diese hindurchtreten und auf diese Weise eine Verbindung mit weiteren Streifen eingehen.

Vorteilhafte Weiterbildungen der Erfindung ergeben sich aus den Unteransprüchen und der Beschreibung.

Nachfolgend werden bevorzugte Ausführungsbeispiele der Erfindung anhand der Zeichnung näher erläutert. In dieser zeigen:

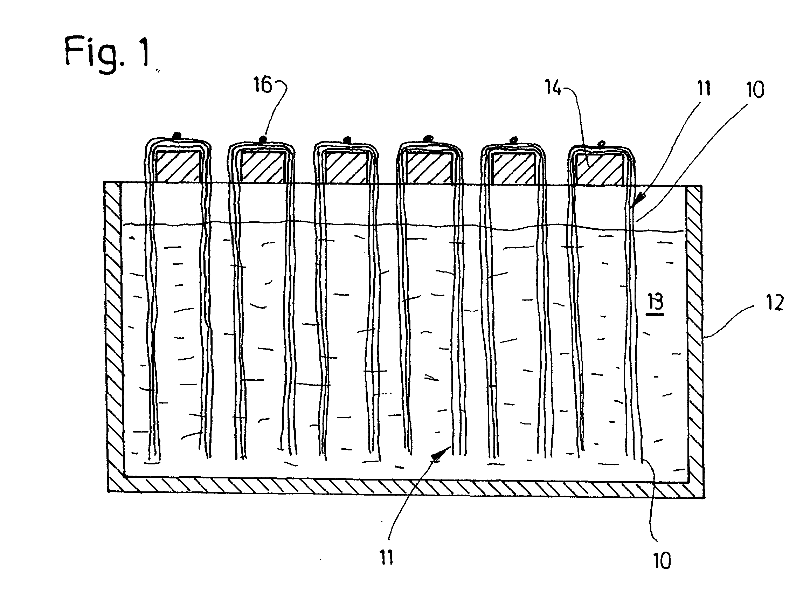

- Fig. 1: eine Seitenansicht eines Behälters mit hängend in diesem angeordnetem Füllmaterial,
- Fig. 2: eine Draufsicht auf das eben ausgebreitete Füllmaterial mit durch einen Strang verbundenen Streifen,
- Fig. 3: einen vergrößerten Querschnitt III - III durch das Füllmaterial gemäß Fig. 2,
- Fig. 4: einen vergrößerten Querschnitt für eine weitere Ausführungsform des Füllmaterials mit mehreren in einer Ebene angeordneten Streifen, die durch zwei Stränge auf gegenüberliegenden Seiten der Streifen verbunden sind,
- Fig. 5: eine Draufsicht auf eine Verbindung mehrerer Streifen mit einer Haltebahn und einem Strang,
- Fig. 6: einen vergrößerten Querschnitt VI - VI durch das Füllmaterial gemäß Fig. 5,
- Fig. 7: einen vergrößerten Querschnitt für eine weitere Ausführungsform des Füllmaterials,
- Fig. 8: mehrere durch einen Strang verbundene Lagen mit einer Vielzahl von Streifen,
- Fig. 9: ein vergrößerter Querschnitt IX - IX durch das Füllmaterial gemäß Fig. 8, und
- Fig. 10: einen vergrößerten Querschnitt für eine weitere Ausführungsform des Füllmaterials mit mehreren versetzt angeordneten Lagen,
- Fig. 11: einen vergrößerten Querschnitt für eine weitere Ausführungsform des Füllmaterials mit zwei Lagen mit versetzter Anordnung der Streifen, die durch einen Strang miteinander und mit einer Haltebahn verbunden sind,
- Fig. 12: ein vergrößerter Querschnitt für ein weiteres Ausführungsbeispiel des Füllmaterials mit Streifen unterschiedlicher Breite.

Das in den Figuren dargestellte Füllmaterial wird vorzugsweise als Tropfkörper zur biologischen Abwasserbehandlung eingesetzt. Das mehrere Streifen 10 aufweisende Füllmaterial 11 wird vorzugsweise hängend in einem Behälter 12 angeordnet, in dem es in Kontakt mit dem zu reinigenden Fluid, also dem Abwasser 13, tritt. Das Füllmaterial 11 kann beispielsweise U-förmig über einen Träger 14 gelegt werden mit horizontaler Auflagefläche auf den Träger 14. Im Bereich des Trägers 14, also ungefähr mittig, weist das Füllmaterial 11 mindestens ein Haltemittel auf, welches quer zur Längserstreckung des Füllmaterials orientiert ist.

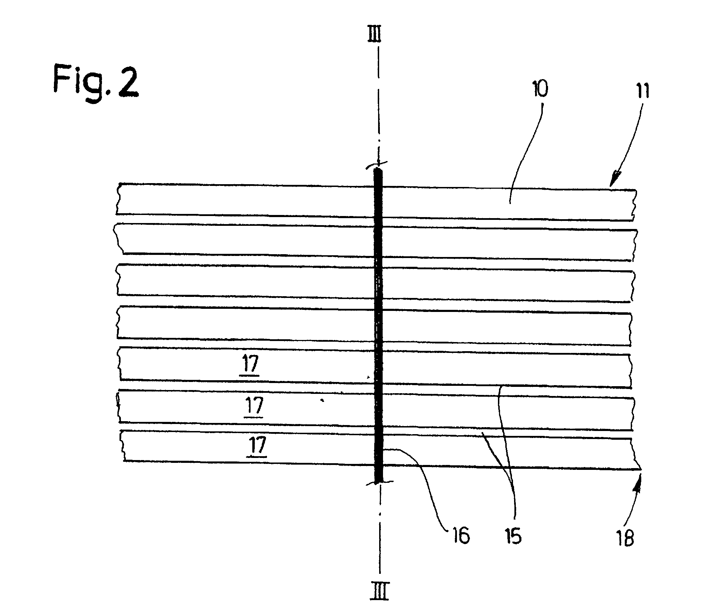

Die Fig. 2 zeigt das Füllmaterial 11 in einer nur zum Zwecke der besseren Darstellung in einem in einer Ebene ausgebreiteten Zustand. Mehrere Streifen 10 sind mit paralleler Längserstreckung nebeneinander angeordnet. Die Streifen 10 können in Richtung ihrer Längserstreckung jeweils mindestens einen zugaufnehmenden Verstärkungsstrang aufweisen. Zur Vereinfachung sind in den Figuren nur Streifen ohne derartige Verstärkungsstränge dargestellt.

Zwischen den Streifen 10 bilden sich mindestens teilweise, vorzugsweise im Bereich des Haltemittels, Zwischenräume 15 aus. Im in Fig. 2 dargestellten Ausführungsbeispiel handelt es sich um parallele Zwischenräume 15. Eine Vielzahl von Streifen 10 ist durch einen Strang 16 miteinander verbunden. Die Stränge 16 sind mindestens auf den Oberseiten 17 der Streifen 10 mit diesen verbunden. Der Strang 16 kann beliebige Querschnitte aufweisen. Vorzugsweise weist der Strang 16 einen ungefähr kreisförmigen Querschnitt auf oder ist als Flachbahn, beispielsweise mit ungefähr rechteckförmigem Querschnitt, ausgeführt.

Für die Anordnung und Ausführung der Streifen 10 gibt es eine Vielzahl unterschiedlicher Möglichkeiten, ohne daß sich das der Erfindung zugrundeliegende Prinzip der Verbindung der Streifen 10 dadurch ändert. Es können die Streifen 10 (wie in Fig. 2 dargestellt) in einer einzigen Lage 18 angeordnet sein. Eine derartige Lage 18 kann ebenfalls dicht erstellt werden, so daß die Zwischenräume 15 geschlossen sind und die Seitenflächen benachbarter Streifen 10 aneinander anliegen. Weiterhin ist es ebenfalls möglich, daß sich benachbarte Streifen überlappen und somit der Strang 16 mit den Oberseiten 17 der Streifen 10 nur im nicht überlappenden Bereich verbunden ist.

Der Strang 16 ist ungefähr quer zur Längserstreckung der Streifen 10 orientiert. Die Querschnittsfläche des Strangs 16 kann über die gesamte Breite des Füllmaterials 11 konstant sein oder variieren. Beispielsweise kann der Querschnitt des Strangs 16 im Bereich der Zwischenräume 15 größer sein, wenn diese mit dem Material des Strangs 16 gefüllt sind.

Zur Verbindung mehrerer Streifen 10 kann wie in Fig. 2 dargestellt ein einziger Strang 16 verwendet werden. Eine Verbesserung der Verbindung und der Fixierung der relativen Lage der Streifen 10 zueinander kann durch die Anordnung mehrerer Stränge 16 auf derselben und/oder unterschiedlichen Seiten der Streifen 10 oder der Lage erzielt werden. Für das erfindungsgemäße Füllmaterial 11 können die unterschiedlichsten bekannten Streifen 10 eingesetzt werden.

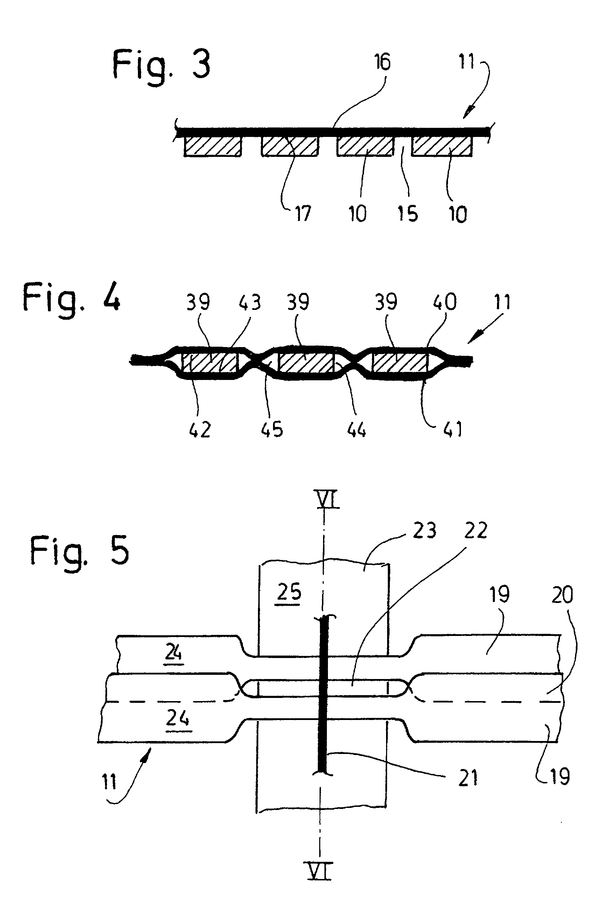

In Fig. 3 ist der Strang 16 in der Schnittebene ungefähr geradlinig ausgebildet. Die Verbindung zwischen Strang 16 und den Streifen 10 erfolgt im Bereich der Oberseiten 17. In diesem Ausführungsbeispiel tritt der Strang 16 nicht in die Zwischenräume 15 ein, so daß die Seitenflächen der Streifen 10 frei sind. Alternativ ist es ebenfalls denkbar, daß der Strang 16 in den Zwischenraum 15 eintritt, der Strang 16 also nicht gradlinig ausgebildet ist. Mit der Erstellung einer zusätzlichen Verbindung im Bereich der Seitenflächen der Stränge 10 kann die Anbindung des Strangs 16 an die Streifen 10 verbessert werden.

Im in Fig. 4 dargestellten Ausführungsbeispiel werden mehrere Streifen 39 einer Lage 18 durch zwei Stränge 40, 41 auf gegenüberliegenden Seiten der Lage 18 verbunden. Der obere Strang 40 ist mindestens im Bereich der Oberseiten 42 der Streifen 39 mit diesen verbunden, der untere Strang 41 mindestens mit den Unterseiten 43 der Streifen 39. Eine zusätzliche Verbindung eines oder beider Stränge 40, 41 mit den Streifen 39 kann im Bereich der Seitenflächen 44 erfolgen. Zusätzlich können die Stränge 40, 41 im Bereich der Zwischenräume 45 miteinander verbunden sein.

Im Ausführungsbeispiel gemäß Fig. 5 weisen die mit paralleler Längserstreckung angeordneten Streifen 19 mit (teilweisen) Überlappungen 20 im Bereich des Strangs 21 Zwischenräume 22 auf. Dem Strang 21 ist weiterhin eine Haltebahn 23 zugeordnet, die quer zur Längserstreckung der Streifen 19 orientiert ist und sich auf der dem Strang 21 weggerichteten Seite der Streifen 19 befindet. Bei der Haltebahn 23 handelt es sich vorzugsweise um eine Folie. Die Streifen 19 werden untereinander und mit der Haltebahn 23 über den Strang 21 verbunden, der mindestens im Bereich der Oberseiten 24 mit den Streifen 19 und auf der den Streifen 19 zugewandten Seite der Haltebahn 23, nämlich Kontaktfläche 25, mit der Haltebahn 23 verbunden ist.

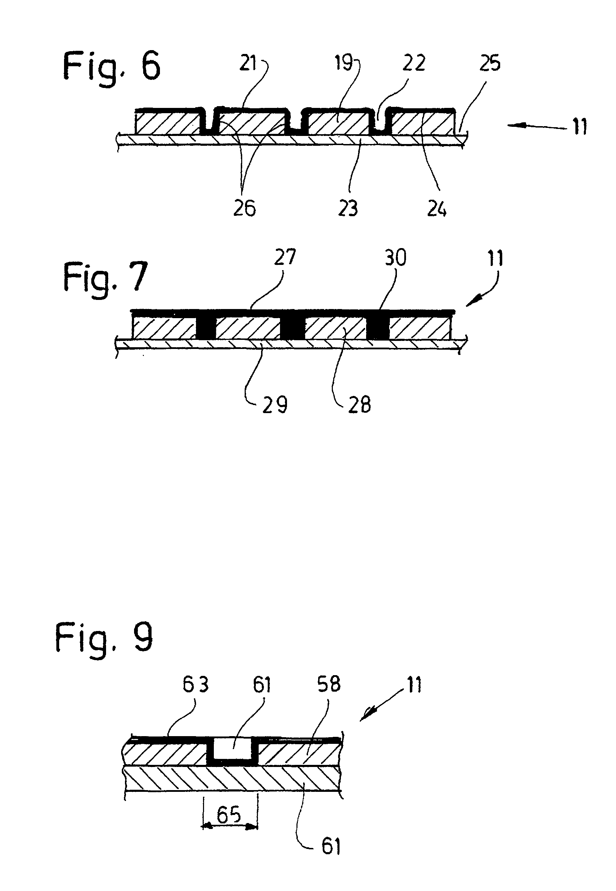

Im Ausführungsbeispiel gemäß Fig. 6 ist das entsprechende Eintreten des Strangs 21 in die Zwischenräume 22 zu erkennen. Zusätzlich ist unterhalb der Streifen 19 die Haltebahn 23 zu erkennen. Der Strang 21 liegt somit auf der Oberseite 24 und den Seitenflächen 26 der Streifen 19 sowie der Kontaktfläche 25 der Haltebahn 23 an und geht mit diesen eine Verbindung ein.

Im in Fig. 7 dargestellten Ausführungsbeispiel wird mittels des Strangs 27 ebenfalls eine Lage von Streifen 28 mit einer Haltebahn 29 verbunden. Im Gegensatz zu den vorher dargestellten Ausführungsbeispielen ist hier die Querschnittsfläche des Strangs 27 nicht konstant, da die Zwischenräume 30 benachbarter Streifen 28 mindestens teilweise mit dem den Strang 27 bildenden Material gefüllt sind.

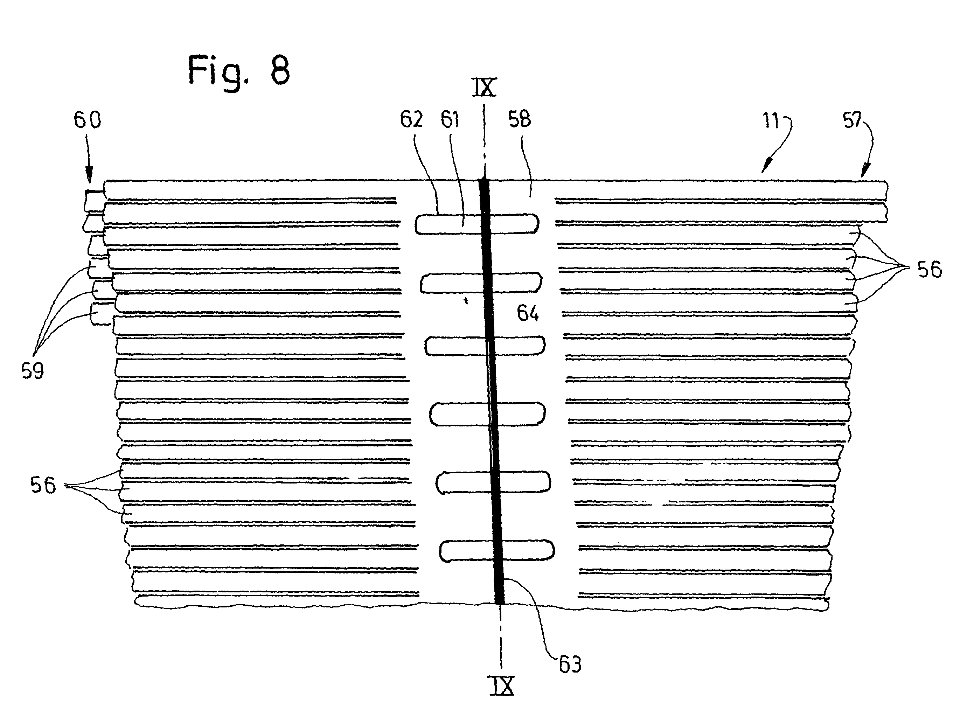

Gemäß einem besonderen Ausführungsbeispiel der Erfindung sind die Streifen 56 einer Lage 57 über eine Verbindungsbahn 58 verbunden (Fig. 8). Im dargestellten Ausführungsbeispiel sind die Streifen 56 einer Lage 57 und die Verbindungsbahn 58 einstückig ausgeführt. Die Verbindungsbahn 58 kann hierbei dieselbe Funktion wie die Haltebahnen erfüllen. Die mittels der Stränge erstellten Verbindungen von Streifen mit Haltebahnen können gleichermaßen für die Verbindung mit einer Verbindungsbahn eingesetzt werden (und umgekehrt).

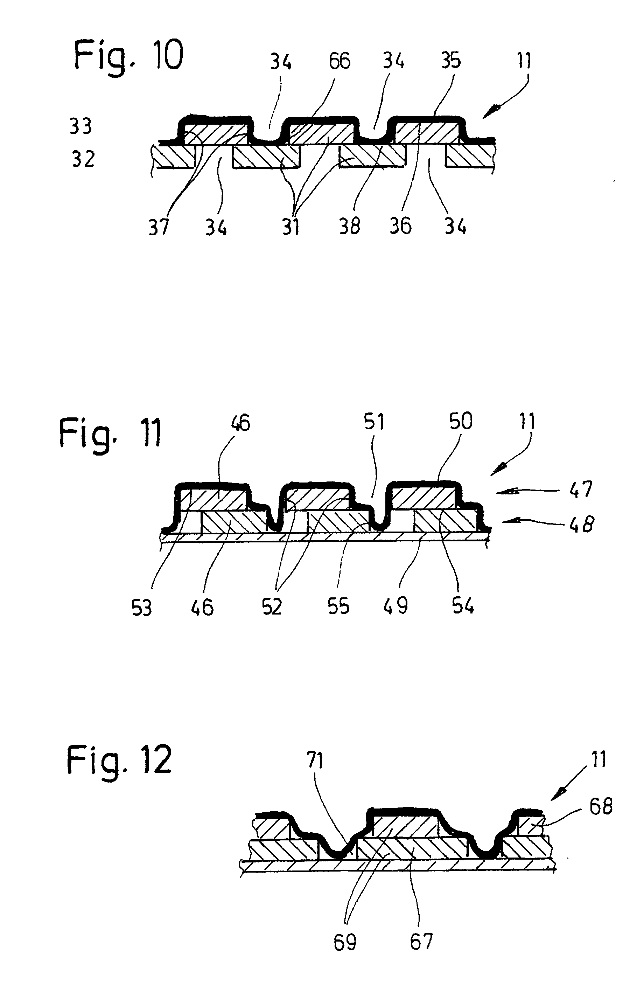

Die Verbindung der Streifen 56 einer Lage 57 mit weiteren Streifen 59 einer weiteren Lage 60 erfolgt im Bereich der Verbindungsbahnen 58 der Lage 57 und der Verbindungsbahn 61 der Lage 60. Zu diesem Zweck weist eine Verbindungsbahn 58, 61 Ausnehmung 62 auf, durch die die andere Verbindungsbahn 58, 61 bei aufeinanderliegenden Verbindungsbahnen 58, 61 zugänglich ist. Quer zur Längserstreckung der Streifen 56, 59 ist ein Strang 63 orientiert. Dieser tritt in Kontakt mit der Oberseite 64 der Haltebahn 58. Im Bereich der Ausnehmungen 62 aus der Verbindungsbahn 58 tritt der Strang durch diese hindurch und geht eine Verbindung mit der Verbindungsbahn 61 ein (Fig. 9). Bei den Ausnehmungen 62 kann es sich beispielsweise um schlitzförmige Ausnehmungen mit Längserstreckung in Richtung der Längserstreckung der Streifen handeln.

Mehr als zwei Lagen 57, 60 können gleichermaßen verbunden werden, wenn sämtliche Lagen Ausnehmungen 62 aufweisen und diese beispielsweise treppenförmig angeordnet werden oder mit abnehmender Breite 65 ausgebildet sind.

Im in Fig. 10 dargestellten Ausführungsbeispiel sind Streifen 31 mindestens im Bereich der Stränge in mehreren Lagen 32, 33 angeordnet. Jede Lage 32, 33 weist eine Vielzahl von Streifen 31 auf, die in einer Ebene angeordnet sind, vorzugsweise mit paralleler Längserstreckung und unter Ausbildung von Zwischenräumen 34. Im dargestellten Ausführungsbeispiel ist die Breite der Zwischenräume 34 kleiner als die Breite der Streifen 31. Die Streifen 31 unterschiedlicher Lagen 32, 33 sind versetzt zueinander angeordnet, derart, daß jeder Streifen 31 einer Lage 32 Kontakt mit mindestens einem benachbarten Streifen 31 einer Lage 33 hat, vorzugsweise wie im dargestellten Ausführungsbeispiel zu zwei benachbarten Streifen 31. Die nach unten offenen Zwischenräume 34 der oberen Lage 33 werden durch Teilbereiche der Oberseiten 38 der Streifen 31 der unteren Lage 32 geschlossen. Der Strang 35 ist mit den Oberseiten 36 sowie den Seitenflächen 37 der Streifen 31 einer Lage 33 verbunden. Andererseits tritt der Strang 35 durch die Zwischenräume 34 in Kontakt mit nicht durch Streifen 31 der Lage 33 abgedeckte Teilbereiche der Oberseiten 38 der Streifen der benachbarten Lage 32.

Bei den dargestellten Ausführungsformen können auch andere Anordnungen benachbarter Streifen gewählt werden. Beispielsweise können die Abstände der Streifen einer Lage größer oder kleiner sein oder regellos sein. Weiterhin kann in den Ausführungsformen eine mindestens weitere Lage mit Streifen von oben Kontakt mit einem Strang haben und so mit diesem und weiteren Streifen verbunden sein.

Weiterhin können durch die erfindungsgemäßen Haltemittel auch mehr als zwei Lagen miteinander bzw. mit einer Haltebahn verbunden werden. Im in Fig. 11 dargestellten Ausführungsbeispiel sind die Streifen 46 in zwei Lagen 47, 48 auf einer Haltebahn 49 angeordnet. Jeweils zwei benachbarte Streifen 46 der Lagen 47, 48 sind bei parallelen Querschnitten derart aufeinander angeordnet, daß die Außenkontur des gemeinsam gebildeten Querschnitts treppenförmig ist. Der Strang 50 ist U-förmig über zwei derartige benachbarte Streifen 46 gelegt, wobei ein Seitenschenkel des in diesem Bereich U-förmigen Stranges 50 entsprechend der Außenkontur treppenförmig ausgebildet ist. Zwischen jeweils zwei benachbarten Gruppen von treppenförmig angeordneten Streifen 46 wird von diesen ein Zwischenraum 51 gebildet. Im Bereich dieses Zwischenraumes 51 tritt der Strang 50 in Verbindung mit der Haltebahn 49. Der Strang 50 hat somit Kontakt mit den Seitenflächen 52 der Streifen 46 der oberen Lage 47 sowie deren Oberseite 53, Teilbereichen der Oberseiten 54 sowie einer Seitenfläche 55 der Streifen 46 der unteren Lage 48 und der Haltebahn 49 im Bereich der Zwischenräume 51.

Bei einer Abwandlung der Ausführungsform gemäß Fig. 11 können je ein Streifen 46 der oberen Lage 47 und der unteren Lage 48 mit fluchtend angeordneten Seitenflächen angeordnet sein. In diesem Fall ergibt sich ungefähr eine Form des Strangs 50 entsprechend einem Rechteck, wobei der Strang im Bereich der Oberseiten 53 der Streifen 46 der oberen Lage 47 und im Bereich der Seitenflächen 52 der Streifen 46 beider Lagen mit den Streifen 46 verbunden ist.

Eine Vergrößerung der Vielfalt möglicher Anordnungen der durch einen oder mehrere Stränge verbundenen Streifen ergibt sich, wenn Streifen, beispielsweise unterschiedlicher Lagen, im Verbindungsbereich unterschiedlich breit ausgeführt sind (Fig. 12). Liegt auf einem breiten Streifen 67 ein schmalerer Streifen 68 auf, so sind von oben beide Streifen für ein Haltemittel, insbesondere einen Strang, zugänglich und können durch diesen verbunden werden. Sind derartige aus mindestens zwei übereinanderliegenden Streifen 67, 68 unterschiedlicher Breite gebildete Gruppen 69 von Streifen 67, 68 beabstandet voneinander angeordnet, so können sämtliche Streifen durch einen Strang miteinander verbunden werden und gleichzeitig mit einer unter den Gruppen 69 von Streifen 67, 68 angeordneten Haltebahn 70 verbunden werden.

In den dargestellten Ausführungsbeispielen sind die Stränge scharfkantig um die sich im Kantenbereich der Streifen und im Kontaktbereich der Streifen mit den Haltebahnen ergebenden Ecken geführt. Für den Fall, daß kleine Krümmungsradien der Stränge nicht erwünscht bzw. nicht erreichbar sind, kann sich in diesen Bereichen ein Spalt ausbilden (Spalt 66 in Fig. 10 bzw. Spalt 71 in Fig. 12).

Eine Verbesserung der Anbindung der Streifen kann erzielt werden, wenn im Bereich der Streifen Ausnehmungen vorgesehen werden, durch die das Haltemittel hindurchtreten kann, so daß die Kontaktfläche der Stränge mit den Streifen und/oder den Haltebahnen vergrößert werden kann.

Die Position der Stränge und Orientierung der Stränge bezüglich der Längserstreckung ist beliebig, vorzugsweise sind diese quer zur Längserstreckung orientiert und in der Umgebung der Endbereiche oder der Mittenbereichen der Streifen positioniert.

Beim Material der Stränge 16, 21, 27, 35, 40, 41, 50, 63 handelt es sich vorzugsweise um ein Material, welches im erweichtem, insbesondere erwärmtem Zustand auf die Streifen 10, 19, 28, 31, 39, 46, 56, 59 und/oder Haltebahn 23, 29, 49, 58, 61 aufgebracht werden kann und mit diesen nach der Aushärtung eine (feste) Verbindung eingeht. Zum Einsatz kommen hier beispielsweise thermoplastische Kunststoffe, insbesondere (Hochdruck)-Polyäthylene. Vorzugsweise wird für die Stränge dasselbe Material verwendet wie für die Streifen.

Zur Herstellung des erfindungsgemäßen Füllmaterials werden zunächst die Streifen entsprechend einer der zuvor beschriebenen Anordnungen ausgerichtet. Der jeweilige Strang wird dann in (dick-)flüssigem oder pastösem Zustand auf die Streifen und/oder die Haltebahn aufgebracht. Beispielsweise kann das Haltemittel den Streifen aus einem Extruder mittels einer diesem zugeordneten Spritzdüse zugeführt werden. Die Spritzdüse wird während der Auf- und Einbringung des Haltemittels quer zur Längserstreckung der Streifen bewegt. Vorzugsweise wird die Spritzdüse hin- und herbewegt und erstellt bei jeder Bewegung einen separaten Strang. Mit einer Hin- und Herbewegung der Spritzdüse können so zwei (beabstandete) Stränge auf eine Gruppe zu verbindender Stränge aufgebracht werden. Alternativ kann bei einer Bewegung eine Gruppe von Streifen verbunden werden und nach Austausch mit einer neuen Gruppe bei der Rückbewegung der Spritzdüse eine weitere Gruppe von Streifen mittels eines Strangs verbunden werden.

Ein in Querrichtung der Streifen geradliniger Strang kann bei gradliniger Bewegung der Spritzdüse erstellt werden. Gradlinige Stränge können weiterhin unter einem (spitzen) Winkel zu Querrichtung der Streifen orientiert sein. Bei nicht gradliniger Führung der Spritzdüse können außerdem beliebige Stränge, beispielsweise schlangenlinienförmige Stränge, erstellt werden, wodurch die Kontaktfläche der Stränge mit den Streifen vergrößert werden kann.

Bei konstanter Bewegungsgeschwindigkeit und konstanter Ausflußgeschwindigkeit des Haltemittels ergibt sich ein konstanter Querschnitt der Stränge. Im Bereich der Zwischenräume zwischen benachbarten Streifen tritt das Haltemittel durch diese hindurch und verbindet beispielsweise Streifen einer Lage mit Streifen einer anderen Lage oder einem weiteren Haltemittel.

Die Anbindung der Stränge an die Streifen kann dadurch verbessert werden, daß die Stränge im noch weichen Zustand unter (leichter) Druckausübung gegen die Streifen und/oder Haltebahnen gepreßt werden. Diese Druckausübung kann derart erfolgen, daß es zu einer Abplattung der Stränge kommt und infolgedessen zu einer Vergrößerung der Kontaktfläche. Weiterhin kann derart das Eintreten der Stränge in Zwischenräume vergrößert werden.

### Bezugszeichenliste:

- 10: Streifen
- 11: Füllmaterial
- 12: Behälter
- 13: Abwasser
- 14: Träger
- 15: Zwischenraum
- 16: Strang
- 17: Oberseite
- 18: Lage
- 19: Streifen
- 20: Überlappung
- 21: Strang
- 22: Zwischenraum
- 23: Haltebahn
- 24: Oberseite
- 25: Kontaktfläche
- 26: Seitenfläche
- 27: Strang
- 28: Streifen
- 29: Haltebahn
- 30: Zwischenraum
- 31: Streifen
- 31: Lage
- 33: Lage
- 34: Zwischenraum
- 35: Strang
- 36: Oberseite
- 37: Seitenfläche
- 38: Oberseite
- 39: Streifen
- 40: Strang
- 41: Strang
- 42: Oberseite
- 43: Unterseite
- 44: Seitenfläche
- 45: Zwischenraum
- 46: Streifen
- 47: Lage
- 48: Lage
- 49: Haltebahn
- 50: Strang
- 51: Zwischenraum
- 52: Seitenfläche
- 53: Oberseite
- 54: Oberseite
- 55: Seitenfläche
- 56: Streifen
- 57: Lage
- 58: Verbindungsbahn
- 59: Streifen
- 60: Lage
- 61: Verbindungsbahn
- 62: Ausnehmung
- 63: Strang
- 64: Oberseite
- 65: Breite
- 66: Spalt
- 67: Streifen
- 68: Streifen
- 69: Gruppe
- 70: Haltebahn
- 71: Spalt

## Patentansprüche

1. Füllmaterial für Tropfkörper zur Behandlung von Fluiden, insbesondere zur biologischen Abwasserreinigung, mit einer Vielzahl von Streifen (10, 19, 28, 31, 39, 46, 56, 59) aus Kunststoff, wobei mehrere Streifen durch mindestens ein im wesentlichen quer zu den Streifen (10, 19, 28, 31, 39, 46, 56, 59) orientiertes Haltemittel verbunden sind, **dadurch gekennzeichnet, daß** mindestens ein Teil der Haltemittel aus einem in erweichtem Zustand auf die Streifen (10, 19, 28, 31, 39, 46, 56, 59) aufgebrachten Strang (16, 21, 27, 35, 40, 41, 50, 63) besteht.

2. Füllmaterial nach Anspruch 1, **dadurch gekennzeichnet, daß** der oder jeder Strang (16, 21, 27, 35, 40, 41, 50, 63) unmittelbar mit den ihm zugerichteten Seiten der Streifen (10, 19, 28, 31, 39, 46, 56, 59) verbunden ist.

3. Füllmaterial nach einem der vorhergehenden Ansprüche, **dadurch gekennzeichnet, daß** sich zwischen benachbarten Streifen (10, 19, 28, 31, 39, 46, 56, 59) mindestens im Bereich des Strangs oder gegebenenfalls mehrerer Stränge (16, 21, 27, 35, 40, 41, 50, 63) ein Zwischenraum (15, 22, 30, 34, 45, 51) befindet, wobei sich vorzugsweiste der oder jeder Strang (16, 21, 27, 35, 40, 41, 50, 63) quer über die Zwischenräume (15, 22, 30, 34, 45, 51) hinweg und/oder in die Zwischenräume hinein erstreckt.

4. Füllmaterial nach einem der vorhergehenden Ansprüche, **dadurch gekennzeichnet, daß** auf gegenüberliegenden Seiten der Streifen (10, 19, 28, 31, 39, 46, 56, 59) jeweils mindestens ein Strang (16, 21, 27, 35, 40, 41, 50, 63) angeordnet ist.

5. Füllmaterial nach einem der vorhergehenden Ansprüche, **dadurch gekennzeichnet, daß** das Haltemittel auf der dem oder jedem Strang (16, 21, 27, 35, 40, 41, 50, 63) gegenüberliegenden Seite der Streifen (10, 19, 28, 31, 39, 46, 56, 59) als eine quergerichtete Haltebahn (23, 29, 49, 58, 61) ausgebildet ist, wobei gegebenenfalls der oder jeder Strang (16, 21, 27, 35, 40, 41, 50, 63) in den Bereichen der Zwischenräume (15, 22, 30, 34, 45, 51) zwischen benachbarten Streifen (10, 19, 28, 31, 39, 46, 56, 59) mit der Haltebahn (23, 29, 49, 58, 61) verbunden ist.

6. Füllmaterial nach einem der vorhergehenden Ansprüche, **dadurch gekennzeichnet, daß** eine Mehrzahl von Streifen (10, 19, 28, 31, 39, 46, 56, 59) in unterschiedlichen Schichten bzw. Lagen (18, 32, 33, 47, 48, 57, 60) angeordnet ist, wobei vorzugsweise mindestens in Teilbereichen der Stränge (16, 21, 27, 35, 40, 41, 50, 63) zwischen benachbarten Streifen (10, 19, 28, 31, 39, 46, 56, 59) jeder Lage (18, 32, 33, 47, 48, 57, 60) sich ein Zwischenraum (15, 22, 30, 34, 45, 51) befindet.

7. Füllmaterial nach einem der vorhergehenden Ansprüche, **dadurch gekennzeichnet, daß** sich der oder jeder Strang (35, 50) derart über die Zwischenräume (15, 34, 51) der Streifen (31, 46) derjenigen Lage (47) erstreckt, auf der der oder jeder Strang (35, 50) angeordnet ist, und daß die sich in den Zwischenräumen befindenden Abschnitte des oder jedes Strangs (35, 50) auf den Streifen (31, 46) der anderen Lage (32, 48) aufliegen, vorzugsweise mit denselben unmittelbar verbunden sind.

8. Füllmaterial nach einem der vorhergehenden Ansprüche, **dadurch gekennzeichnet, daß** beiden voneinander abgewandten Seiten der Streifen (39) jeder Lage mindestens ein Strang (40, 41) zugeordnet ist.

9. Füllmaterial nach einem der vorhergehenden Ansprüche, **dadurch gekennzeichnet, daß** die in den Zwischenräumen (45) liegenden Bereiche der den unterschiedlichen Lagen zugeordneten Stränge (40, 41) in den Bereichen der Zwischenräume (45) mindestens teilweise miteinander unmittelbar verbunden sind.

10. Füllmaterial nach einem der vorhergehenden Ansprüche, **dadurch gekennzeichnet, daß** im Kontaktbereich des oder jedes Strangs mit einem oder mehreren anderen Strängen, Streifen und/oder der Haltebahn die Stränge, Streifen bzw. die Haltebahn mindestens teilweise miteinander verschmolzen, verschweißt und/oder verklebt sind.

11. Füllmaterial nach einem der vorhergehenden Ansprüche, **dadurch gekennzeichnet, daß** der oder jeder Strang (16, 21, 27, 35, 40, 41, 50, 63), die Haltebahn (23, 29, 49, 58, 61) und die Streifen (10, 19, 28, 31, 39, 46, 56, 59) aus einem thermoplastischen Kunststoff, vorzugsweise aus dem gleichen thermoplastischen Kunststoff wie die Streifen (10, 19, 28, 31, 39, 46, 56, 59) und/oder die Haltebahn (23, 29, 49, 58, 61), gebildet sind.

12. Verfahren zur Herstellung von Füllmaterial für Tropfkörper zur Behandlung von Fluiden, insbesondere zur biologischen Abwasserreinigung, mit einer Vielzahl von Streifen (10, 19, 28, 31, 39, 46, 56, 59) aus Kunststoff, wobei mehrere Streifen (10, 19, 28, 31, 39, 46, 56, 59) durch mindestens ein im wesentlichen quer zu den Streifen (10, 19, 28, 31, 39, 46, 56, 59) orientiertes Haltemittel verbunden werden, insbesondere nach einem der vorhergehenden Ansprüche, **dadurch gekennzeichnet, daß** das Haltemittel in erweichtem Zustand auf die Streifen (10, 19, 28, 31, 39, 46, 56, 59) aufgebracht wird.

13. Verfahren nach Anspruch 12, **dadurch gekennzeichnet, daß** das Haltemittel in von benachbarten Streifen (10, 19, 28, 31, 39, 46, 56, 59) gebildete Zwischenräume (15, 22, 30, 34, 45, 51) eintritt.

14. Verfahren nach Anspruch 12 oder 13, **dadurch gekennzeichnet, daß** das Haltemittel den Streifen (10, 19, 28, 31, 39, 46, 56, 59) aus einer Spritzdüse zugeführt wird, wobei vorzugsweise während der Auf- und Einbringung des Haltemittels die Spritzdüse quer zur Längserstreckung der Streifen (10, 19, 28, 31, 39, 46, 56, 59) bewegt wird.

## Claims

1. Packing for fluid-treating trickling filters, in particular for biological sewage purification, with a multiplicity of strips (10, 19, 28, 31, 39, 46, 56, 59) of plastic, a plurality of strips being connected by at least one holding means oriented essentially transversely in relation to the strips (10, 19, 28, 31, 39, 46, 56, 59), **characterized in that** at least part of the holding means comprises a strand (16, 21, 27, 35, 40, 41, 50, 63) applied in a softened state to the strips (10, 19, 28, 31, 39, 46, 56, 59).

2. Packing according to Claim 1, **characterized in that** the or each strand (16, 21, 27, 35, 40, 41, 50, 63) is connected directly to the sides of the strips (10, 19, 28, 31, 39, 46, 56, 59) directed towards it.

3. Packing according to one of the preceding claims, **characterized in that** between neighbouring strips (10, 19, 28, 31, 39, 46, 56, 59) there is an intermediate space (15, 22, 30, 34, 45, 51), at least in the region of the strand or possibly plurality of strands (16, 21, 27, 35, 40, 41, 50, 63), the or each strand (16, 21, 27, 35, 40, 41, 50, 63) preferably extending transversely over the intermediate spaces (15, 22, 30, 34, 45, 51) and/or into the intermediate spaces.

4. Packing according to one of the preceding claims, **characterized in that** at least one strand (16, 21, 27, 35, 40, 41, 50, 63) is respectively arranged on opposite sides of the strips (10, 19, 28, 31, 39, 46, 56, 59).

5. Packing according to one of the preceding claims, **characterized in that** the holding means is formed on the side of the strips (10, 19, 28, 31, 39, 46, 56, 59) lying opposite the or each strand (16, 21, 27, 35, 40, 41, 50, 63) as a transversely directed holding web (23, 29, 49, 58, 61), the or each strand (16, 21, 27, 35, 40, 41, 50, 63) possibly being connected to the holding web (23, 29, 49, 58, 61) in the regions of the intermediate spaces (15, 22, 30, 34, 45, 51) between neighbouring strips (10, 19, 28, 31, 39, 46, 56, 59).

6. Packing according to one of the preceding claims, **characterized in that** a plurality of strips (10, 19, 28, 31, 39, 46, 56, 59) are arranged in different layers (18, 32, 33, 47, 48, 57, 60), there preferably being an intermediate space (15, 22, 30, 34, 45, 51) between neighbouring strips (10, 19, 28, 31, 39, 46, 56, 59) of each layer (18, 32, 33, 47, 48, 57, 60).

7. Packing according to one of the preceding claims, **characterized in that** the or each strand (35, 50) extends over the intermediate spaces (15, 34, 51) of the strips (31, 46) of that layer (47) on which the or each strand (35, 50) is arranged, and **in that** the portions of the or each stand (35, 50) located in the intermediate spaces rest on the strips (31, 46) of the other layer (32, 48), preferably are directly connected to the same.

8. Packing according to one of the preceding claims, **characterized in that** at least one strand (40, 41) is assigned to both sides, facing away from each other, of the strips (39) of each layer.

9. Packing according to one of the preceding claims, **characterized in that** the regions of the strands (40, 41) assigned to the different layers lying in the intermediate spaces (45) are at least partly connected directly to one another in the regions of the intermediate spaces (45).

10. Packing according to one of the preceding claims, **characterized in that**, in the contact region of the or each strand with one or more other strands, strips and/or the holding web, the strands, strips or the holding web are at least partly fused, welded and/or adhesively bonded to one another.

11. Packing according to one of the preceding claims, **characterized in that** the or each strand (16, 21, 27, 35, 40, 41, 50, 63), the holding web (23, 29, 49, 58, 61) and the strips (10, 19, 28, 31, 39, 46, 56, 59) are formed from a thermoplastic material, preferably from the same thermoplastic material as the strips (10, 19, 28, 31, 39, 46, 56, 59) and/or the holding web (23, 29, 49, 58, 61).

12. Process for manufacturing packing for fluid-treating trickling filters, in particular for biological sewage purification, with a multiplicity of strips (10, 19, 28, 31, 39, 46, 56, 59) of plastic, a plurality of strips (10, 19, 28, 31, 39, 46, 56, 59) being connected by at least one holding means oriented essentially transversely in relation to the strips (10, 19, 28, 31, 39, 46, 56, 59), in particular according to one of the preceding claims, **characterized in that** the holding means is applied in a softened state to the strips (10, 19, 28, 31, 39, 46, 56, 59).

13. Process according to Claim 12, **characterized in that** the holding means enters intermediate spaces (15, 22, 30, 34, 45, 51) formed by neighbouring strips (10, 19, 28, 31, 39, 46, 56, 59).

14. Process according to Claim 12 or 13, **characterized in that** the holding means is fed to the strips (10, 19, 28, 31, 39, 46, 56, 59) from an extrusion die, the extrusion die preferably being moved transversely in relation to the longitudinal extent of the strips (10, 19, 28, 31, 39, 46, 56, 59) during the application and introduction of the holding means.

## Revendications

1. Matière de remplissage de lits bactériens pour le traitement de fluides, en particulier pour l'épuration biologique des eaux usées, comportant un grand nombre de bandes (10, 19, 28, 31, 39, 46, 56, 59) en plastique, plusieurs bandes étant jointes par au moins un moyen de maintien orienté sensiblement perpendiculairement aux bandes (10, 19, 28, 31, 39, 46, 56, 59), **caractérisée par le fait qu'**au moins une partie des moyens de maintien est constituée d'un cordon (16, 21, 27, 35, 40, 41, 50, 63) appliqué à l'état ramolli sur les bandes (10, 19, 28, 31, 39, 46, 56, 59).

2. Matière de remplissage selon la revendication 1, **caractérisée par le fait que** le ou chaque cordon (16, 21, 27, 35, 40, 41, 50, 63) est joint directement aux côtés dirigés vers lui des bandes (10, 19, 28, 31, 39, 46, 56, 59).

3. Matière de remplissage selon l'une des revendications précédentes, **caractérisée par le fait qu'**un intervalle (15, 22, 30, 34, 45, 51) se trouve entre les bandes voisines (10, 19, 28, 31, 39, 46, 56, 59) au moins dans la zone du cordon ou éventuellement de plusieurs cordons (16, 21, 27, 35, 40, 41, 50, 63), et de préférence, le ou chaque cordon (16, 21, 27, 35, 40, 41, 50, 63) s'étend en travers des intervalles (15, 22, 30, 34, 45, 51) et/ou entre dans ceux-ci.

4. Matière de remplissage selon l'une des revendications précédentes, **caractérisée par le fait qu'**au moins un cordon (16, 21, 27, 35, 40, 41, 50, 63) est placé sur chacun de côtés opposés des bandes (10, 19, 28, 31, 39, 46, 56, 59).

5. Matière de remplissage selon l'une des revendications précédentes, **caractérisée par le fait que** le moyen de maintien situé sur le côté des bandes (10, 19, 28, 31, 39, 46, 56, 59) opposé au cordon ou à chaque cordon (16, 21, 27, 35, 40, 41, 50, 63) est une bande de maintien dirigée transversalement (23, 29, 49, 58, 61), et éventuellement, le ou chaque cordon (16, 21, 27, 35, 40, 41, 50, 63) est joint à la bande de maintien (23, 29, 49, 58, 61) dans les zones des intervalles (15, 22, 30, 34, 45, 51) entre les bandes voisines (10, 19, 28, 31, 39, 46, 56, 59).

6. Matière de remplissage selon l'une des revendications précédentes, **caractérisée par le fait que** plusieurs bandes (10, 19, 28, 31, 39, 46, 56, 59) sont disposées en couches ou strates différentes (18, 32, 33, 47, 48, 57, 60), et de préférence, un intervalle (15, 22, 30, 34, 45, 51) se trouve au moins dans des parties des cordons (16, 21, 27, 35, 40, 41, 50, 63) entre les bandes voisines (10, 19, 28, 31, 39, 46, 56, 59) de chaque strate (18, 32, 33, 47, 48, 57, 60).

7. Matière de remplissage selon l'une des revendications précédentes, **caractérisée par le fait que** le ou chaque cordon (35, 50) s'étend sur les intervalles (15, 34, 51) des bandes (31, 46) de la strate (47) sur laquelle est placé le ou chaque cordon (35, 50), et que les tronçons du ou de chaque cordon (35, 50) qui se trouvent dans les intervalles reposent sur les bandes (31, 46) de l'autre strate (32, 48), de préférence sont jointes directement à celles-ci.

8. Matière de remplissage selon l'une des revendications précédentes, **caractérisée par le fait qu'**au moins un cordon (40, 41) est associé aux deux côtés opposés des bandes (39) de chaque strate.

9. Matière de remplissage selon l'une des revendications précédentes, **caractérisée par le fait que** les zones situées dans les intervalles (45) des cordons (40, 41) associés aux différentes strates sont jointes directement au moins partiellement dans les zones des intervalles (45).

10. Matière de remplissage selon l'une des revendications précédentes, **caractérisée par le fait que** dans la zone de contact du ou de chaque cordon avec un ou plusieurs autres cordons, bandes et/ou la bande de maintien, les cordons, les bandes ou la bande de maintien sont fondus, soudés et/ou collés ensemble au moins partiellement.

11. Matière de remplissage selon l'une des revendications précédentes, **caractérisée par le fait que** le ou chaque cordon (16, 21, 27, 35, 40, 41, 50, 63), la bande de maintien (23, 29, 49, 58, 61) et les bandes (10, 19, 28, 31, 39, 46, 56, 59) sont formés d'un thermoplastique, de préférence du même thermoplastique que les bandes (10, 19, 28, 31, 39, 46, 56, 59) et/ou la bande de maintien (23, 29, 49, 58, 61).

12. Procédé de fabrication de matière de remplissage de lits bactériens pour le traitement de fluides, en particulier pour l'épuration biologique des eaux usées, comportant un grand nombre de bandes (10, 19, 28, 31, 39, 46, 56, 59) en plastique, dans lequel plusieurs bandes (10, 19, 28, 31, 39, 46, 56, 59) sont jointes par au moins un moyen de maintien orienté sensiblement perpendiculairement aux bandes (10, 19, 28, 31, 39, 46, 56, 59), en particulier selon l'une des revendications précédentes, **caractérisé par le fait que** le moyen de maintien est appliqué à l'état ramolli sur les bandes (10, 19, 28, 31, 39, 46, 56, 59).

13. Procédé selon la revendication 12, **caractérisé par le fait que** le moyen de maintien entre dans des intervalles (15, 22, 30, 34, 45, 51) formés par les bandes voisines (10, 19, 28, 31, 39, 46, 56, 59).

14. Procédé selon l'une des revendications 12 et 13, **caractérisé par le fait que** le moyen de maintien est apporté aux bandes (10, 19, 28, 31, 39, 46, 56, 59) depuis une buse de pulvérisation, et de préférence, pendant l'application du moyen de maintien, la buse de pulvérisation est déplacée perpendiculairement à l'étendue longitudinale des bandes (10, 19, 28, 31, 39, 46, 56, 59).
